# FASCICULE DE BREVET EUROPEEN

(11) **EP 2 678 793 B1**
(45) Date de publication et mention de la délivrance du brevet: **02.05.2018**
(21) Numéro de dépôt: 12705296.7
(22) Date de dépôt: 21.02.2012
(51) Int. Cl.: G06F 21/62

(54) **PROCEDE D'ATTRIBUTION D'IDENTIFIANTS A DES OBJETS, ET DE DISCRIMINATION DESDITS OBJETS A PARTIR DES IDENTIFIANTS ATTRIBUES**
VERFAHREN ZUR ZUWEISUNG VON KENNUNGEN AN OBJEKTE UND UNTERSCHEIDUNG BESAGTER OBJEKTE BASIEREND AUF DEN ZUGEWIESENEN KENNUNGEN
METHOD FOR ATTRIBUTING IDENTIFIERS TO OBJECTS AND DISCRIMINATION OF SAID OBJECTS BASED ON THE ATTRIBUTED IDENTIFIERS

(30) Priorité: 25.02.2011 FR 1151579
(43) Date de publication de la demande: 01.01.2014
(73) Titulaire: Airbus DS SAS, 78990 Elancourt (FR)
(72) Inventeur: ROUSSEAU, Frédéric, F-78180 Montigny Le Bretonneux (FR); THUILLET, Céline, F-78960 Voisins Le Bretonneux (FR); LACOUR, David, F-92210 Saint-Cloud (FR)
(74) Mandataire: Camus, Olivier Jean-Claude
(86) Numéro de dépôt international: PCT/EP2012/052959
(87) Numéro de publication internationale: WO 2012/113806

(56) Documents cités:
- WO-A2-03/056750
- CHAUM D: "GROUP SIGNATURES", ADVANCES IN CRYPTOLOGY- EUROCRYPT. INTERNATIONAL CONFERENCE ONTHE THEORY AND APPLICATION OF CRYPTOGRAPHIC TECHNIQUES, SPRINGER VERLAG, DE, 1 avril 1991 (1991-04-01), pages 257-265, XP000900793,
- SUN X ET AL: "Secure Vehicular Communications Based on Group Signature and ID-Based Signature Scheme", PROCEEDINGS OF THE 2007 IEEE INTERNATIONAL CONFERENCE ON COMMUNICATIONS (ICC 2007), 24-28 JUNE 2007, GLASGOW, UK, IEEE, PISCATAWAY, NJ, USA, 1 juin 2007 (2007-06-01), pages 1539-1545, XP031125891, ISBN: 978-1-4244-0353-0
- BONEH D ET AL: "Short group signatures", LECTURE NOTES IN COMPUTER SCIENCE, SPRINGER, DE, vol. 3152, 19 août 2004 (2004-08-19), pages 41-55, XP002438499, ISBN: 978-3-540-24128-7 cité dans la demande

## Description

### DOMAINE TECHNIQUE DE L'INVENTION

La présente invention se rapporte à un procédé d'attribution d'identifiants à des objets, et de discrimination desdits objets à partir des identifiants attribués. Elle a également pour objet un système de surveillance d'un ensemble d'objets mettant en oeuvre le procédé selon l'invention.

L'invention a essentiellement pour but de permettre la reconnaissance d'une existence probable d'au moins un objet sensible parmi une pluralité d'objets, ladite existence probable ne devant être détectable que par des personnes autorisées utilisant un équipement adapté. Plus précisément, l'invention concerne un procédé permettant aux seuls dépositaires d'un outil de vérification de classer des objets en au moins deux catégories en fonction de leur caractère sensible sur la base de l'identifiant qui leur a été attribué ; dans des modes de mise en oeuvre avantageux, les dépositaires de l'outil de vérification, tout comme une quelconque tierce personne non autorisée, ne sont pas en mesure de forger de fausses identités d'objets et ne sont pas en mesure, à un instant donné, de dénombrer les objets sensibles parmi l'ensemble des objets.

La présente invention trouve des applications notamment dans le domaine du contrôle aérien, permettant aux contrôleurs aériens autorisés, et à eux seuls, d'identifier des aéronefs opérant des vols qualifiés de sensibles dans l'espace aérien où évoluent simultanément des avions commerciaux et des avions gouvernementaux. Les avions gouvernementaux sont quasiment systématiquement qualifiés de sensibles. Certains avions commerciaux, par exemple des avions utilisés pour réaliser des transports spéciaux de personnalités, matières ou fonds, peuvent également être qualifiés de sensibles. L'invention trouve aussi des applications dans le domaine des télécommunications, pour empêcher que des tiers puissent discriminer des informations sensibles par rapport à des informations non-sensibles, transmises par exemple sur un bus de données dans un module microélectronique, ou transmises via une interface de radiocommunication ; en particulier, le procédé selon l'invention peut être utilisé pour empêcher un tiers de discriminer des flux normaux et des flux sensibles chiffrés, ou de discriminer des flux de voix, des flux vidéo, des flux de données, issus d'organisations sensibles.

La présente invention trouve également des applications dans le domaine de la logistique, en permettant la discrimination discrète d'objets fragiles ou precieux ou dangeruex (radio-activité) dans un environnement où ils co-existent avec des objets communs.

La présente invention sera plus particulièrement décrite, à titre d'exemple uniquement, dans une mise en oeuvre adaptée au contrôle aérien, sans que cette illustration soit limitative de la portée de l'invention.

### ARRIERE-PLAN TECHNOLOGIQUE DE L'INVENTION

On rappelle qu'il suffit trivialement d'au moins un bit dans une identité numérique pour classer en deux catégories des objets identifiés. Ainsi, par exemple, l'organisation de l'aviation civile internationale (OACI-ICAO) définit une identité dite "ICAO address", incluant au moins un bit de discrimination entre des aéronefs commerciaux et des aéronefs gouvernementaux. Une telle classification, permettant une définition d'identité, est décrite par exemple dans le document "EUROCAE ED-73C MOPS for secondary surveillance radar Mode S transponders EUROCONTROL standard document for surveillance data exchange part 12 - ASTERIX Catégorie 021, ADS-B messages".

Le système de classification existant présente un inconvénient à l'aéronautique civile : cette classification permet à tout observateur de l'identité "ICAO address", visible en clair, d'effectuer une discrimination entre aéronefs commerciaux et aéronefs gouvernementaux, et d'une manière plus générale, entre des aéronefs sensibles et des aéronefs communs. Le terme "commun" est utilisé par opposition au terme "sensible" afin de définir une catégorie autre que la catégorie des aéronefs sensibles.

Par ailleurs, on connaît, dans l'état de la technique, différents outils de sécurité de l'information qui permettent de limiter l'accès notamment à des informations relatives à des identifiants uniquement à des personnes autorisées ayant connaissance de la technique cryptographique utilisée et des clefs intervenant.

On connaît ainsi :
- des outils de la cryptographie symétrique, qui définissent des procédés assurant la confidentialité d'au moins un bit d'une identité en utilisant une clé secrète. Un inconvénient est que le dépositaire de ladite clé secrète, qui lui est fournie pour vérifier le caractère sensible ou non d'une identité, devient symétriquement capable de générer de fausses identités sensibles
- des outils de la cryptographie symétrique, qui définissent des procédés de codes d'authentification de message dépendant d'une clé secrète, qui conduisent au même inconvénient vis-à-vis du dépositaire capable de générer un faux.
- des outils de la cryptographie asymétrique, qui définissent des procédés assurant la confidentialité d'au moins un bit d'une identité en utilisant une clé privée connue de l'émetteur et une clé publique associée à l'émetteur. L'application de tels procédés sur les identités fixes d'objets permet au dépositaire de les dénombrer, et ainsi de connaître le nombre d'objets sensibles observés, ce qui peut constituer un inconvénient : en effet, avantageusement, on aspire à réaliser une discrimination de tous les objets présents, sans pour autant permettre le dénombrement des objets sensibles.
- Les outils de la cryptographie asymétrique, qui définissent des procédés assurant la confidentialité et/ou l'authenticité d'au moins un bit d'une identité, au moyen de chiffrement authentifiant et/ou d'une fonction de signature. Un inconvénient de l'application directe d'un tel procédé est qu'il ne protège pas contre la réutilisation par un tiers d'une identité que le dépositaire autorisé identifierait comme étant commune ou sensible; autrement dit, une protection est nécessaire contre la réutilisation d'une identité associée à un instant à un objet dont la classe (sensible ou commune) est connue par un tiers en collusion avec le dépositaire autorisé ; il faudrait en effet que, avantageusement, le tiers ne puisse rien déduire de l'observation d'une identité associée à un instant à un objet, pour les occurrences ultérieures de cette même identité., même dans le cas où il y a forte présomption qu'il s'agisse d'un objet commun suite à l'information provenant du dépositaire pour l'occurrence antérieure de cette identité.

Dans l'art antérieure les signature de groupe sont connues, voir CHAUM D: "GROUP SIGNATURES",ADVANCES IN CRYPTOLOGY- EUROCRYPT. INTERNATIONAL CONFERENCE ONTHE THEORY AND APPLICATION OF CRYPTOGRAPHIC TECHNIQUES, SPRINGER VERLAG, DE, 1 avril 1991, qui permettent de signer un message en gardant l'anonymat. Une application des signatures de groupe est l'anonymisation et la sécurité de la communication des véhiculés, voir SUN X ET AL: "Secure Vehicular Communications Based on Group Signature and ID-Based Signature Scheme",PROCEEDINGS OF THE 2007 IEEE INTERNATIONAL CONFERENCE ON COMMUNICATIONS (ICC 2007), 24-28 JUNE 2007, GLASGOW, UK. Par ailleurs, le procédé selon l'invention doit répondre à une contrainte supplémentaire, à savoir qu'il ne doit pas impliquer de modifications dans les identités des objets communs déjà existant préalablement à la mise en oeuvre dudit procédé. Dans l'exemple du domaine de l'aéronautique, il est nécessaire que la mise en oeuvre du procédé pour les identités d'objets sensibles ou communs, assure une compatibilité ascendante avec toutes les identités "ICAO address" des objets communs déjà attribuées, quelles qu'elles soient. En particulier, l'interprétation d'une identité "ICAO address" doit apporter une compatibilité ascendante pour les objets communs, vis-à-vis d'un contrôleur aérien non habilité, c'est-à-dire non autorisé à discriminer les aéronefs en fonction de leur classe (sensible ou commune), ou vis-à-vis d'un système de contrôle aérien plus ancien, afin d'éviter par exemple que ledit système plus ancien n'interprète mal un champ d'information de classification, pouvant dans certains cas être réduit à un bit de discrimination, si ledit champ d'information est chiffré sans que cela lui soit connu.

En conséquence, dans le domaine de l'aéronautique servant ici d'exemple pour illustrer l'invention, l'art antérieur ne répond pas au besoin d'un vol sensible, c'est-à-dire d'un vol opéré dans un aéronef qui doit être discriminable des vols commerciaux ordinaires par les seuls contrôleurs aériens habilités, ceux-ci ne devant pas être capables de forger des identités de vols sensibles, ni même, avantageusement, de dénombrer à un instant donné, le nombre précis de vols sensibles présents dans l'espace aérien qu'il contrôle.

### DESCRIPTION GENERALE DE L'INVENTION

L'objet de l'invention offre une solution au problème qui vient d'être exposé, et intègre les contraintes qui viennent d'être exposées, en proposant un procédé d'attribution d'identifiants à des objets, et de discrimination desdits objets à partir des identifiants attribués, lesdits objets constituant un ensemble d'objets comportant au moins deux catégories d'objets, avec au moins une première catégorie d'objets dits sensibles, et au moins une deuxième catégorie d'objets dits communs, caractérisé en ce que ledit procédé comporte notamment les différentes étapes consistant à :
- attribuer un identifiant à une pluralité d'objets de l'ensemble d'objets en réalisant les opérations suivantes :
   - pour chaque objet sensible, réaliser une opération de calcul d'une signature au moyen d'une fonction de signature déterminée faisant intervenir une clé de signature, d'au moins un paramètre public associé à l'objet sensible considéré, puis attribuer comme identifiant un numéro d'identification comportant au moins la signature calculée, l'identifiant de l'objet sensible étant ainsi un identifiant signé ;
   - pour chaque objet commun, attribuer comme identifiant un numéro d'identification distinct des identifiants des autres objets communs sans réaliser l'opération de calcul de signature réalisée pour chaque objet sensible, l'identifiant de l'objet commun étant ainsi un identifiant non signé avec la fonction de signature déterminée ;
- transmettre l'identifiant de l'objet vers un équipement de discrimination, possédant une clé de vérification de chaque signature calculée pour les objets sensibles, ledit équipement de discrimination étant apte à discriminer les identifiants attribués à chaque objet de la pluralité d'objets pour constituer au moins un premier groupe d'objets et un deuxième groupe d'objets distincts.

Outre les caractéristiques principales qui viennent d'être mentionnées dans le paragraphe précédent, le procédé selon l'invention peut présenter une ou plusieurs caractéristiques complémentaires parmi les suivantes, considérées individuellement ou selon toutes les combinaisons techniquement possibles :
- l'opération d'attribution d'un identifiant à un objet commun étant réalisée en attribuant à l'objet commun considéré un identifiant dont la valeur est une valeur résultat de la fonction de signature déterminée utilisée pour attribuer les identifiants aux objets sensibles.
- le premier groupe d'objets constitué par l'équipement de discrimination est un groupe d'objets, dits objets reçus communs, pour lesquels une opération de vérification de la signature au moyen de la clé de vérification et de l'identifiant attribué a révélé une absence d'utilisation de la fonction de signature déterminée et en ce que le deuxième groupe d'objets, dits objets reçus potentiellement sensibles, pour lesquels une opération de vérification de la signature au moyen de la clé de vérification et de l'identifiant attribué a révélé une présence possible de signature.
- un premier objet sensible et un deuxième objet sensible sont signés en utilisant respectivement une première clé de signature et une deuxième clé de signature.
- l'opération d'attribution d'un identifiant à un objet sensible est réalisée à plusieurs reprises, à différents instants.
- le au moins un paramètre public intervenant dans le calcul de la signature de chaque objet sensible considéré est un paramètre variable dans le temps.
- le au moins un paramètre public intervenant dans le calcul de la signature de chaque objet sensible considéré est un des paramètres suivants, plusieurs de ces paramètres pouvant être combinés pour faire l'objet du calcul de signature :
   - position spatiale de l'objet sensible considéré, ou une zone géographique d'évolution de l'objet sensible considéré, par exemple une région d'information de vol ;
   - information temporelle, notamment indication de l'instant, ou d'une période temporelle, auquel est réalisé le calcul de signature ;
   - information de vitesse de l'objet sensible considéré.
- la fonction de signature déterminée est une fonction de signature courte de groupe.
- les objets sont des engins de type aéronefs, les objets sensibles étant des aéronefs devant faire l'objet d'une surveillance particulière.

Selon un autre aspect, l'invention concerne un système de surveillance d'un ensemble d'objets caractérisé en ce qu'il met en oeuvre le procédé selon l'invention dans une quelconque des ses mises en oeuvre.

Le procédé proposé ne préjuge pas du moyen de transmission de l'identifiant à discriminer : l'identifiant peut être transmis en un champ ou en une pluralité de champs de messages.

L'invention et ses différentes applications seront mieux comprises à la lecture de la description qui suit et à l'examen des figures qui l'accompagnent.

### BREVE DESCRIPTION DES FIGURES

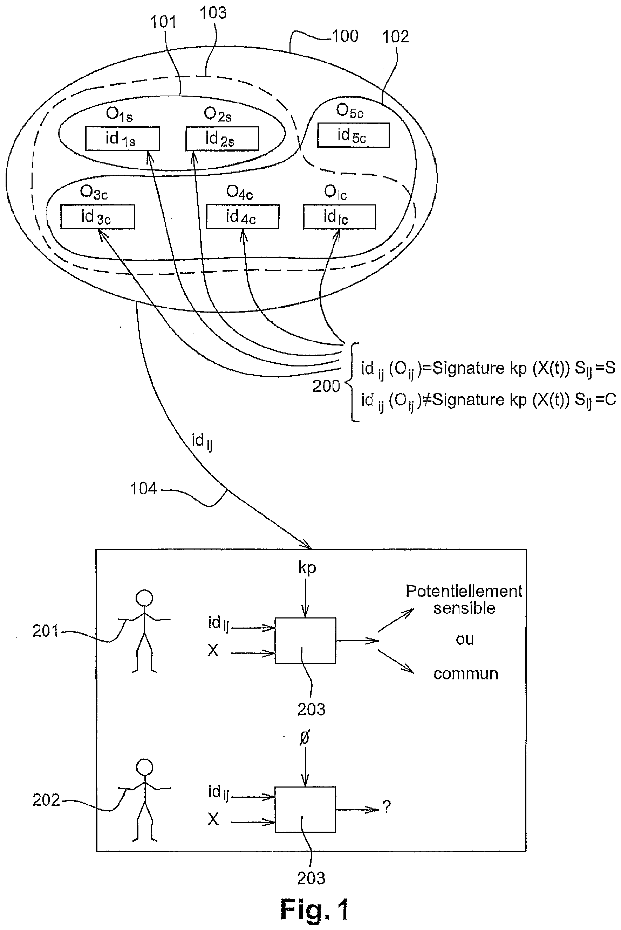

La figure 1, unique, n'est présentée qu'à titre indicatif et nullement limitatif de l'invention ; elle représente d'une façon schématique, une illustration d'un exemple de mise en oeuvre du procédé selon l'invention.

### DESCRIPTION DETAILLEE D'AU MOINS UN MODE DE REALISATION DE L'INVENTION

Sur la figure 1, on a représenté un ensemble 100 d'objets Oij. Le paramètre i est utilisé pour numéroter l'objet dans l'ensemble d'objets 100. L'ensemble 100 d'objets Oij est divisé en une première catégorie 101 d'objets dits sensibles, et une deuxième catégorie 102 d'objets dits communs. Le paramètre j est utilisé pour procéder à la distinction entre les objets sensibles, j prenant alors la valeur S, et les objets communs, j prenant alors la valeur C.

Dans le procédé selon l'invention, on attribue un identifiant à une pluralité 103 d'objets compris dans l'ensemble d'objets 100. Dans certains exemples, des objets peuvent ne pas être affectés à une des catégories, soit parce que ils n'ont pas été repérés par un observateur, soit parce que ils sont affectés à une tierce catégorie.

Pour identifier, avant une opération de transmission 104 via un moyen quelconque de communication, par exemple par voie radio, les différents objets de la pluralité 103 d'objets, on procède, dans l'invention, à la construction d'une identité numérique Idi associée à l'objet Oij, ladite opération de construction étant différente pour les objets sensibles, et pour les objets communs.

Ainsi, dans un exemple de mise en oeuvre du procédé selon l'invention, une opération 200 de construction d'une identité numérique d'un objet de catégorie sensible ou de catégorie commune est réalisée en respectant les étapes suivantes :
Pour les objets sensibles, on détermine tout d'abord la valeur d'un paramètre public prédéterminé de l'objet Ois. Par paramètre public, on désigne une ou plusieurs informations attachées à l'objet considéré qui sont par ailleurs accessibles, déterminables ou connues, pour une tierce entité amenée à déterminer si l'identifiant reçu et attaché à l'objet considéré est un identifiant associé à un objet sensible ou non. Un tel paramètre public peut par exemple être un numéro fixe associé à l'objet considéré. Avantageusement, le paramètre public utilisé comprend au moins une information susceptible d'évoluer dans le temps. On désigne par "X" le paramètre public.

On utilise alors une fonction de signature, utilisant une clé de signature Kp, pour associer au paramètre public "X" une signature Idis(Oxs) associée à l'objet sensible considéré, et qui constitue l'identifiant à transmettre pour ledit objet sensible considéré. La clé Kp peut être la clé d'un groupe d'objets sensibles ou bien peut être avantageusement spécifique pour chaque objet sensible. Les fonctions de signature sont des fonctions mathématiques connues de l'homme du métier. On pourra ainsi par exemple se référer aux articles de référence suivants:
- "Short signature from the Weil pairing' Dan Boneh, Hovav Shacham, B. Lynn ; J. of Cryptology, Vol. 17, No. 4, pp. 297-319, 2004 Extended abstract in Asiacrypt 2001); et
- "Short group signature', Dan Boneh,Xavier Boyen, Hovav Shacham, Advances in Cryptology-CRYPTO 2004, Springer-Verlag.)

Avantageusement, on prévoit que le paramètre public utilisé en entrée de la fonction de signature est un paramètre qui varie dans le temps.

A l'inverse des opérations observées pour associer une signature à un objet sensible, dans le procédé selon l'invention, on assigne à un objet non sensible une identité numérique quelconque, en s'interdisant avantageusement d'attribuer une même identité numérique à deux objets non sensibles distincts. En revanche, on prévoit avantageusement que l'identifiant peut appartenir à l'ensemble des identités numériques possibles résultant de la fonction de signature utilisée pour déterminer l'identité numérique des objets sensibles. Autrement dit, l'identifiant d'un objet non sensible a une valeur qui peu appartenir avantageusement à l'ensemble des valeurs résultats de la fonction de signature utilisée pour déterminer l'identité numérique d'un objet sensible. En procédant de la sorte, il apparaît que deux objets distincts, un des deux objets étant un objet sensible, et l'autre étant un objet non sensible, peuvent avoir, dans un mode de mise en oeuvre avantageux de l'invention, une même identité numérique.

En d'autres termes, l'identité des objets d'au moins une catégorie d'objet - ceux de la catégorie sensible dans le cas présent - est construite comme signature d'un paramètre dépendant, entre autres, du contexte spatial et/ou temporel, c'est-à-dire typiquement d'une position de l'objet considéré et/ou d'un instant auquel ledit objet fait l'objet d'une opération de signature, alors que l'identité des objets d'au moins une autre catégorie d'objets - ceux de la catégorie des objets communs dans le cas présent - est choisie librement en n'étant pas construite conformément aux contraintes explicites des procédés utilisés pour l'autre catégorie ; un tel fonctionnement permet d'assurer qu'une identité non conforme aux contraintes de construction de l'autre catégorie est identifiée par la suite comme appartenant à la catégorie commune.

Ainsi, l'opération 200 de construction d'une identité numérique peut se traduire par les équations suivantes :
Idij(Oij)=SignatureKp(X(t)) si j=S ;
Idij(Oij)≠SignatureKp(X(t)) si j=C

Avantageusement, la construction d'une identité n'est pas définitive ; un même objet peut se voir attribuer plusieurs identifiants successifs selon la méthode décrite. Dans le cas où les objets sont des aéronefs, une telle précaution permet de rendre impossible le suivi dans le temps de la position de l'aéronef considéré.

On donne ici un exemple concret de mise en oeuvre de l'étape de construction d'une identité numérique pour un objet sensible :
Dans cet exemple :
- on considère un premier paramètre public NONCE qui est un nombre utilisé une seule fois par l'un parmi l'ensemble des objets sensibles à identifier pendant une longue période d'observation, typiquement plusieurs minutes, ledit NONCE étant choisi de telle sorte que la succession des NONCE disponibles pour l'ensemble des objets sensibles soit monotone et soit calculable de manière universelle par l'ensemble des entités intervenant dans le procédé selon l'invention; NONCE représente ici une valeur d'un compteur monotone global, tel que, par exemple, un compteur de temps issu d'une horloge universelle, fournie par le système GPS ou GALILEO ;
- on considère un deuxième paramètre public, POSITION, qui est un nombre dont la sémantique est avantageusement associée à une coordonnée géographique ;
- on considère la valeur PARAM, qui est le résultat d'une fonction associant NONCE, POSITION et éventuellement d'autres paramètres publics ; par exemple PARAM est le résultat d'une concaténation de NONCE et POSITION
- on considère la valeur t-MAC, qui est le résultat d'un algorithme de hachage cryptographique applicable à PARAM, optionnellement tronqué sur t bit
- on peut alors calculer la valeur, au moyen d'un équipement apte à appliquer une fonction de signature, GRP-SIGN, qui est une signature courte, qui est éventuellement une signature courte de groupe, de longueur N bits à partir de la valeur t-MAC, calculée selon un algorithme et des paramètres communs à tous les objets sensibles, et associée à au moins une clé de vérification Kp' ; l'avantage d'utiliser une signature courte réside dans le fait que l'identifiant signé à transmettre n'excède pas quelques centaines de bits, et ne consomme pas trop de bande passante lors de sa transmission dans le cas d'une transmission radio ; l'avantage d'utiliser une signature de groupe réside dans le fait qu'on peut vérifier que le signataire appartient audit groupe d'objets sensibles sans pouvoir l'identifier individuellement
- une identité d'un objet sensible pour les paramètres NONCE et POSITION est ainsi égale à :
   GRP-SIGN (t-MAC(PARAM(NONCE, POSITION))).

Une fois les identifiants attribués à l'ensemble d'objets de la pluralité 103 d'objets, lesdits identifiants sont transmis lors de l'opération de transmission 104. La transmission peut être réalisée par des moyens radio, par exemple dans le contexte du contrôle aérien, mais tout moyen de transmission est envisageable. La transmission peut être initiée par les objets identifiés eux-mêmes, par exemple des aéronefs, ou par un équipement de contrôle distant. Sans restreindre la généralité du procédé selon l'invention, l'identifiant est une identité numérique de longueur (N bits) identique pour tous les objets de toutes catégories.

Dans le contexte du contrôle aérien, l'adresse ICAO comprend un préfixe de code pays suivi d'une adresse d'avion fixe (adr); par exemple dans certain cas il s'agit d'un préfixe de 6 bits et d'une adresse de 12 bits. L'identifiant numérique considéré peut par exemple être la concaténation de ladite adresse adr et d'un complément d'adresse d'au moins 144 bits, transmis dans un message étendu. Dans cet exemple, on a alors un identifiant de N = 162 bits.

Les identifiants sont reçus par au moins une entité.

Dans l'exemple représenté à la figure 1, les entités réceptrices sont un premier contrôleur 201 et un deuxième contrôleur 202, seul le premier contrôleur 201 étant un dépositaire autorisé, c'est-à-dire une personne en possession de la clé de vérification Kp' permettant de déterminer la présence éventuelle d'une signature dans l'identifiant reçu.

Ainsi, dans l'exemple illustré, l'identifiant Idij et le paramètre public X sont transmis à un équipement de discrimination 203, typiquement un calculateur, qui, en utilisant la clé de vérification Kp' permet de déterminer si l'identifiant reçu est susceptible de correspondre à une signature associée au paramètre public X. Le paramètre public X est accessible par exemple par la mesure lorsqu'il s'agit d'information spatiale et/ou temporelle, ou par un moyen de détermination quelconque autre que celui utilisé pour la transmission de la signature.

En reprenant l'exemple concret qui a été détaillé pour l'attribution des identifiants, l'étape de discrimination du procédé selon l'invention se déroule de la manière suivante :
- on récupère, par des procédés hors du propos de la présente invention, les paramètres NONCE et POSITION associés à l'identité étudiée (par exemple, en utilisant un système de surveillance de la navigation aérienne, le paramètre NONCE étant la date de l'observation et le paramètre POSITION étant la position de l'objet à la date de l'observation)
- on teste l'hypothèse que l'objet est un objet sensible observé pour les paramètres NONCE et POSITION selon le procédé d'attribution d'identifiants pour un objet sensible : tester si l'identité dudit objet observé est GRP-SIGN (t-MAC(PARAM(NONCE, POSITION))). Seul le premier contrôleur 201 est apte à réaliser ce test ; le second contrôleur 202 ne possédant pas la clé de vérification Kp' n'est pas en mesure d'effectuer un tel test.

- si le test échoue, l'identité est alors à considérer comme étant celle d'un objet commun, la preuve ayant été fournie qu'il ne s'agit pas d'un objet sensible ;
- si le test réussit, l'objet peut être présumé appartenir à la catégorie sensible ; en effet, dans le mode de mise en oeuvre avantageux selon lequel l'ensemble des valeurs d'identifiant d'un objet non sensible a des valeurs communes avec - ou contient -le sous-ensemble des valeurs résultats de la fonction de signature utilisée pour déterminer l'identité numérique d'un objet sensible, il se peut que le test soit réussi alors même que l'identifiant testé soit celui d'un objet commun ; ainsi, même un dépositaire autorisé possédant la clé de vérification ne peut pas dénombrer, à un instant t, le nombre d'objets sensibles présents parmi la pluralité d'objets observés.

En outre, dans le procédé selon l'invention, les dépositaires de la clé de vérification ne sont pas en mesure de construire une identité d'objet sensible valide en utilisant ladite clé.

Un choix approprié de l'algorithme de signature permet optionnellement de définir un rôle d'autorité de séquestre, capable d'extraire l'identité d'un objet sensible à partir de GRP-SIGN, selon des modalités d'autorité de séquestre connues dans l'art antérieur de la cryptographie. Vu de l'autorité de séquestre, le procédé permet aux seuls dépositaires d'une clé de vérification de classer des objets en deux catégories ("commune" ou "potentiellement sensible"), en apportant une preuve s'il s'agit d'un objet de catégorie "commune" ; dans le cas contraire, l'objet est présumé de catégorie 'sensible' et son identité n'est pas constante dans le temps, sauf pour une autorité de séquestre.

L'objet de l'invention peut s'étendre directement à partir de la description précédente à tout système de transmission d'informations sur des d'objets, associés à des identités de longueur N bits, comprenant
- zéro, un ou une pluralité d'objets communs, dont l'identité est attribuée selon le procédé décrit,
- un ou une pluralité d'objets sensibles, dont l'identité est construite selon le procédé, et associé à au moins une clé de vérification Kp'
- au moins un contrôleur dépositaire de la clé Kp' et capable de discriminer des objets en fonction de leur identité,
- optionnellement, une autorité de séquestre, seule capable d'identifier le signataire d'un identifiant associé à un objet sensible et ainsi d'extraire l'identité d'un objet sensible.

## Revendications

1. Procédé d'attribution d'identifiants (Idij) à des objets (Oij), et de discrimination desdits objets (Oij) à partir des identifiants attribués, lesdits objets (Oij) constituant un ensemble d'objets (100) comportant au moins deux catégories d'objets, avec au moins une première catégorie (101) d'objets dits sensibles (Ois), et au moins une deuxième catégorie (102) d'objets dits communs (Oic), **caractérisé en ce que** ledit procédé comporte notamment les différentes étapes consistant à :
- attribuer (200) un identifiant (Idij) à chaque objet d'une pluralité d'objets de l'ensemble d'objets en réalisant les opérations suivantes :
- pour chaque objet sensible (Ois), réaliser une opération de calcul d'une signature au moyen d'une fonction de signature déterminée faisant intervenir une clé de signature (Kp), au moins un paramètre public (X) associé à l'objet sensible considéré (Ois), puis attribuer comme identifiant un numéro d'identification comportant au moins la signature calculée, l'identifiant de l'objet sensible étant ainsi un identifiant signé ;
- pour chaque objet commun (Oic), attribuer comme identifiant un numéro d'identification distinct des identifiants des autres objets communs sans réaliser l'opération de calcul de signature réalisée pour chaque objet sensible, l'identifiant de l'objet commun étant un identifiant dont la valeur est une valeur résultat de la fonction de signature déterminée utilisée pour attribuer les identifiants aux objets sensibles, l'identifiant étant non signé par la fonction de signature déterminée ;
- transmettre (104) l'identifiant de l'objet vers un équipement de discrimination (203), possédant une clé de vérification (Kp') de chaque signature calculée pour les objets sensibles, ledit équipement de discrimination étant apte à discriminer les identifiants attribués à chaque objet de la pluralité d'objets pour constituer au moins un premier groupe d'objets et un deuxième groupe d'objets distincts.

2. Procédé selon la revendication précédente **caractérisé en ce que** le premier groupe d'objets déterminé par l'équipement de discrimination est un groupe d'objets, dits objets communs, et **en ce que** le deuxième groupe d'objets sont dits objets potentiellement sensibles, les objets dits communs étant les objets pour lesquels une opération de vérification de la signature au moyen de la clé de vérification et de l'identifiant attribué a révélé une absence d'utilisation de la fonction de signature déterminée, et les objets dits potentiellement sensibles étant les objets pour lesquels une opération de vérification de la signature au moyen de la clé de vérification et de l'identifiant attribué a révélé une présence possible de signature.

3. Procédé selon l'une quelconque des revendications précédentes **caractérisé en ce que** un premier objet sensible et un deuxième objet sensible sont signés en utilisant respectivement une première clé de signature et une deuxième clé de signature.

4. Procédé selon l'une quelconque des revendications précédentes **caractérisé en ce que** l'opération d'attribution d'un identifiant à un objet sensible est réalisée à plusieurs reprises, à différents instants.

5. Procédé selon l'une quelconque des revendications précédentes **caractérisé en ce que** au moins un paramètre public intervenant dans le calcul de la signature de chaque objet sensible considéré est un paramètre variable dans le temps.

6. Procédé selon l'une quelconque des revendications précédentes, **caractérisé en ce que** au moins un paramètre public intervenant dans le calcul de la signature de chaque objet sensible considéré est un des paramètres suivants, plusieurs de ces paramètres pouvant être combinés pour faire l'objet du calcul de signature :
- position spatiale de l'objet sensible considéré ;
- information temporelle, notamment indication de l'instant auquel est réalisé le calcul de signature ;
- information de vitesse de l'objet sensible considéré.

7. Procédé selon l'une quelconque des revendications précédentes **caractérisé en ce que** la fonction de signature déterminée est une fonction de signature courte de groupe.

8. Procédé selon l'une quelconque des revendications précédentes **caractérisé en ce que** les objets sont des engins de type aéronefs, les objets sensibles étant des aéronefs devant faire l'objet d'une surveillance particulière.

9. Système de surveillance d'un ensemble d'objets **caractérisé en ce qu'**il met en oeuvre le procédé selon l'une quelconque des revendications précédentes pour réaliser une discrimination desdits objets surveillés.

## Patentansprüche

1. Zuteilungsverfahren von Kennungen (Idij) zu Objekten (Oij) und Diskriminierungsverfahren der genannten Objekte (Oij) ausgehend von zugeteilten Kennungen, wobei die genannten Objekte (Oij) eine Objektgruppe (100) bilden, umfassend wenigstens zwei Objektkategorien, mit wenigstens einer ersten Kategorie (101) von als sensibel bezeichneten Objekten (Ois), und wenigstens einer zweiten Kategorie (102) von als gemeinsam bezeichneten Objekten (Oic), **dadurch gekennzeichnet, dass** das genannte Verfahren insbesondere die unterschiedlichen Schritte umfasst, bestehen aus:
- Zuteilen (200) einer Kennung (Idij) zu jedem Objekt einer Vielzahl von Objekten der Objektgruppe durch Realisieren der folgenden Operationen:
- für jedes sensible Objekt (Ois) Realisieren einer Berechnungsoperation einer Unterschrift mittels einer bestimmten Unterschriftsfunktion, die einen Unterschriftsschlüssel (Kp), wenigstens einen öffentlichen Parameter (X), der dem betrachteten sensiblen Objekt (Ois) zugeordnet ist, verwendet, dann als Kennung eine Kennungsnummer zuteilen, die wenigstens die berechnete Unterschrift umfasst, wobei die Kennung des sensiblen Objekts somit eine unterzeichnete Kennung ist;
- für jedes gemeinsame Objekt (Oic) als Kennung eine von den Kennungen der anderen gemeinsamen Objekte unterschiedliche Identifizierungsnummer als Kennung zuteilen, ohne die Unterschriftsberechnungsoperation zu realisieren, die für jedes sensible Objekt realisiert ist, wobei die Kennung des gemeinsamen Objekts eine Kennung ist, deren Wert ein Ergebniswert der bestimmen Unterschriftsfunktion ist, die zur Zuordnung der Kennungen zu den sensiblen Objekten verwendet wird, wobei die Kennung durch die bestimmte Unterschriftsfunktion nicht unterschrieben ist;
- Übertragen (104) der Kennung des Objekts auf eine Diskriminierungsausrüstung (203), die einen Überprüfungsschlüssel (Kp') jeder für die sensiblen Objekte berechneten Unterschrift besitzt, wobei die genannte Diskriminierungsausrüstung geeignet ist, die jedem Objekt aus der Vielzahl von Objekten zugeordneten Kennungen zu diskriminieren, um wenigstens eine erste Objektgruppe und eine unterschiedliche zweite Objektgruppe zu bilden.

2. Verfahren gemäß dem voranstehenden Anspruch, **dadurch gekennzeichnet, dass** die durch die Diskriminierungsausrüstung bestimmte erste Objektgruppe eine Gruppe von als gemeinsam bezeichneten Objekten ist und dass die zweite Objektgruppe als potenziell sensible Objekte bezeichnet werden, wobei die als gemeinsam bezeichneten Objekte die Objekte sind, für die eine Überprüfungsoperation der Unterschrift mittels des Überprüfungsschlüssels und der zugeordneten Kennung ein Fehlen der Verwendung der bestimmten Unterschriftsfunktion ergeben hat und wobei die als potenziell sensibel bezeichneten Objekte die Objekte sind, für die eine Überprüfungsoperation der Unterschrift mittels des Überprüfungsschlüssels und der zugeordneten Kennung ein mögliches Vorhandensein einer Unterschrift ergeben hat.

3. Verfahren gemäß irgendeinem der voranstehenden Ansprüche, **dadurch gekennzeichnet, dass** ein erstes sensibles Objekt und ein zweites sensibles Objekt unter Verwendung jeweils eines ersten Unterschriftsschlüssels und eines zweiten Unterschriftsschlüssels unterschrieben sind.

4. Verfahren gemäß irgendeinem der voranstehenden Ansprüche, **dadurch gekennzeichnet, dass** die Zuordnungsoperation einer Kennung zu einem sensiblen Objekt wiederholte Male zu unterschiedlichen Zeiten realisiert ist.

5. Verfahren gemäß irgendeinem der voranstehenden Ansprüche, **dadurch gekennzeichnet, dass** wenigstens ein öffentlicher Parameter, der bei der Berechnung der Unterschrift jedes betrachteten sensiblen Objektes verwendet wird, ein in der Zeit variabler Parameter ist.

6. Verfahren gemäß irgendeinem der voranstehenden Ansprüche, **dadurch gekennzeichnet, dass** wenigstens ein öffentlicher Parameter, der bei der Berechnung der Unterschrift jedes betrachteten sensiblen Objekts verwendet wird, einer der folgenden Parameter ist, wobei mehrere dieser Parameter kombiniert sein können, um Gegenstand der Unterschriftsberechnung sein zu können:
- räumliche Position des betrachteten sensiblen Objekts;
- zeitliche Information, insbesondere Angabe des Augenblicks, zu dem die Unterschriftsberechnung realisiert ist;
- Geschwindigkeitsinformation des betrachteten sensiblen Objekts.

7. Verfahren gemäß irgendeinem der voranstehenden Ansprüche, **dadurch gekennzeichnet, dass** die bestimmte Unterschriftsfunktion eine kurze Gruppen-Unterschriftsfunktion ist.

8. Verfahren gemäß irgendeinem der voranstehenden Ansprüche, **dadurch gekennzeichnet, dass** die Objekte Maschinen vom Typ Luftfahrzeug sind, wobei die sensiblen Objekte Luftfahrzeuge sind, die einer besonderen Überwachung unterliegen müssen.

9. Überwachungssystem einer Objektgruppe, **dadurch gekennzeichnet, dass** sie das Verfahren gemäß irgendeinem der voranstehenden Ansprüche zur Realisierung einer Diskriminierung der genannten überwachten Objekte umsetzt.

## Claims

1. A method for assigning identifiers (Idij) to objects (Oij), and for discriminating said objects (Oij) from the identifiers assigned, said objects (Oij) being comprised of a set of objects (100) including at least two categories of objects, with at least one first category (101) of so-called sensitive objects (Ois), and at least one second category (102) of so-called common objects (Oic), **characterised in that** the method includes in particular the different steps of:
- assigning (200) an identifier (Idij) to each object of a plurality of objects of the set of objects by performing the following operations:
- for each sensitive object (Ois), performing an operation of calculating a signature by means of a determined signature function involving a signature key (Kp), at least one public parameter (X) associated with the sensitive object considered (Ois), and then assigning as an identifier an identification number including at least the signature calculated, the identifier of the sensitive object being thus an identifier signed;
- for each common object (Oic), assigning as an identifier an identification number distinct from the identifiers of the other common objects without performing the operation of calculating the signature performed for each sensitive object, the identifier of the common object being an identifier the value of which is a result value of the determined signature function used for assigning the identifiers to the sensitive objects, the identifier being unsigned by the determined signature function;
- transmitting (104) the identifier of the object to a discrimination piece of equipment (203), having a key (Kp') for checking each signature calculated for the sensitive objects, said discrimination piece of equipment being able to discriminate the identifiers assigned to each object of the plurality of objects to comprise at least a first group of objects and a second group of objects which are distinct.

2. The method according to the preceding claim, **characterised in that** the first group of objects determined by the discrimination piece of equipment is a group so-called common objects, and **in that** the second group of objects is so-called potentially sensitive objects, the so-called common objects being the objects for which an operation of checking the signature by means of the checking key and the assigned identifier has revealed an absence of use of the determined signature function, and so-called potentially sensitive objects being the objects for which an operation of checking the signature by means of the checking key and the assigned identifier has revealed a possible presence of signature.

3. The method according to any of the preceding claims, **characterised in that** a first sensitive object and a second sensitive object are signed using a first signature key and a second signature key respectively.

4. The method according to any of the preceding claims, **characterised in that** the operation of assigning an identifier to a sensitive object is made several times, at different moments.

5. The method according to any of the preceding claims, **characterised in that** at least one public parameter involved in calculating the signature of each sensitive object considered is a parameter varying over time.

6. The method according to any of the preceding claims, **characterised in that** at least one public parameter involved in calculating the signature of each sensitive object considered is one of the following parameters, wherein several of these parameters can be combined for being signature calculated:
- spatial position of the sensitive object considered;
- time information, in particular indication of the moment at which the signature calculation is made;
- speed information for the sensitive object considered.

7. The method according to any of the preceding claims, **characterised in that** the determined signature function is a short group signature function.

8. The method according to any of the preceding claims, **characterised in that** the objects are aircraft type vehicles, the sensitive objects being aircrafts having to be particularly monitored.

9. A system for monitoring a set of objects **characterised in that** it implements the method according to any of the preceding claims for performing discrimination of said monitored objects.
